(19) Europäisches Patentamt
European Patent Office
Office européen des brevets

(11) **EP 2 109 104 A1**

(12) **EUROPEAN PATENT APPLICATION**

(43) Date of publication:
**14.10.2009 Bulletin 2009/42**

(51) Int Cl.:
**G11B 7/257** (2006.01)      **G11B 7/005** (2006.01)

(21) Application number: **08154269.8**

(22) Date of filing: **09.04.2008**

| | |
|---|---|
| (84) Designated Contracting States:<br>**AT BE BG CH CY CZ DE DK EE ES FI FR GB GR HR HU IE IS IT LI LT LU LV MC MT NL NO PL PT RO SE SI SK TR**<br>Designated Extension States:<br>**AL BA MK RS**<br><br>(71) Applicant: **Deutsche Thomson OHG**<br>**30625 Hannover (DE)** | (72) Inventor: **Knappmann, Stephan**<br>**78658, Zimmern ob Rottweil (DE)**<br><br>(74) Representative: **Arnold, Klaus-Peter**<br>**Deutsche Thomson OHG**<br>**European Patent Operations**<br>**Karl-Wiechert-Allee 74**<br>**30625 Hannover (DE)** |

(54) **Optical storage medium comprising two semiconductor layers as mask layers**

(57)     The optical storage medium comprises a substrate layer (2), a data layer (2a) arranged on the substrate layer, a first mask layer (4) with a super resolution near field structure, arranged above the data layer, a second mask layer (6) with a super resolution near field structure arranged above the first mask layer, and a first dielectric layer (3) disposed between the first and the second mask layer (4, 6). The first and the second mask layers (4, 6) comprise a semiconductor material, which has an increased reflectivity, when irradiated with a laser beam. The semiconductor material is in particular one of the III-V semiconductor family.

Fig. 4

**Description**

**TECHNICAL FIELD OF THE INVENTION**

The present invention relates to an optical storage medium comprising a substrate layer, a data layer, a first and a second mask layer having a super resolution near field structure and a first dielectric layer arranged between the first and the second mask layer. The optical storage medium is in particular an optical disc for reading and/or writing data with a high data density by utilizing a blue laser diode.

**BACKGROUND OF THE INVENTION**

Optical storage media are media in which data are stored in an optically readable manner, for example by means of a laser and a photo-detector being integrated within a pickup. The photo-detector is used for detecting the reflected light of the laser beam when reading data from the storage medium. In the meanwhile a large variety of optical storage media are known, which are operated with different laser wavelength, and which have different sizes for providing storage capacities from below one Gigabyte up to 50 Gigabyte (GB). The formats include read-only formats such as Audio CD and Video DVD, write-once optical media such as CD-R and DVD-R, DVD+R, as well as rewritable formats like CD-RW, DVD-RW and DVD+RW. Digital data are stored on these media along tracks in one or more layers of the media.

The storage medium with the highest data capacity is at present the Blu-Ray disc (BD), which allows to store up to 50 GB on a dual layer disc. For reading and writing of a Blu-Ray disc an optical pickup with a laser wavelength of 405 nm is used. On the Blu-Ray disc a track pitch of 320 nm and a mark length from 2T to 8T and 9T is used, where T is the channel bit length, and which corresponds with a minimum mark length of 138 - 160 nm. The re-writable BD-RE disc is based on a phase change technology comprising a phase change layer, which uses for example a compound of AgInSbTe or GeSbTe. Further information about the Blu-Ray disc system is available for example from the Blu-Ray group via internet: www.blu-raydisc.com.

New optical storage media with a super resolution near-field structure (Super-RENS) offer the possibility to increase the data density of the optical storage medium by a factor of two to four in one dimension as compared with the Blu-Ray disc. This is possible by a so-called Super-RENS structure, which is placed above a data layer of the optical storage medium, and which significantly reduces the effective size of a light spot used for reading from or writing to the optical storage medium. The super resolution layer is also called a mask layer because it is arranged above the data layer and for some specific materials only the high intensity center part of a laser beam can penetrate the mask layer. Further, materials can be used for the mask layer, which show a higher reflectivity in the center part of the focused laser beam, e.g. InSb shows this nonlinear optical property. Therefore, the Super-RENS effect allows to record and read data stored in marks of an optical disc, which have a size below the resolution limit of an optical pick-up used for reading or writing the data on the disc.

A super resolution near field technique for recording and retrieving small marks beyond the optical diffraction limit is described be Tominaga, Nakano and Atoda in "An approach for recording and readout beyond the diffraction limit with an Sb thin film", Applied Physics Letters, Vol. 73, No. 15, 12 October 1998, which describe to use an Sb thin film as a super resolution layer.

It is known that also semiconductor materials can be used as a mask layer for Super-RENS optical storage media, for example ZnO. A semiconductor material of this kind utilized for a Super-RENS layer is described by Takamori et al, "Energy-Gap-Induced super-Resolution Optical Disc using ZnO Interference Film", Japanese Journal of Applied Physics, Vol. 44, No. 5b, 2005, pp. 3627 - 3630. Takamori et al describe a Super-RENS disc with ZnO as an active layer deposited on a ROM type substrate and show that a temperature rise can locally increase the ZnO transmittance, thus triggering a near field interaction capable of below-diffraction-limit detection.

In the articles Hyot et al, "Phase change materials and Super-RENS", E*PCOS 05, Technical Digest, Cambridge, 2005, and Pichon et al, "Multiphysics Simulation of Super-Resolution BD ROM Optical Disk Readout" 2006 IEEE, 0-7803-9494-1/06, PP 206 - 208, a semi-conducting mask layer is proposed in which a local change of the refractive index can be obtained through photo generation of free carriers. A thermal description is given to provide information on temperature distribution during readout of a data layer.

In US20050153108 an optical storage medium is disclosed comprising a substrate layer, a data layer, a first and a second super resolution layer used as mask layers and an insertion layer disposed between both mask layers. For the mask layers, oxides from the noble metals Pt, Au, Pd, or Ag are used. Optical storage media comprising at least two super resolution layers are also known from US2005259563, EP1492101 and US7232598. For nearly all of the metal oxide based optical storage media described in these references, the metal oxide is in particular used as a recording layer. The super-resolution effect is then partly based on a metal nano-particle effect and partly based on a phase-change effect.

The Super-RENS layers at present under development for future optical storage media have the drawback that a comparatively high laser power is needed to activate the mask layer by high temperature or high laser power. There is also a need to provide a Super-RENS read-only disc having a high long-time stability.

## SUMMARY OF THE INVENTION

The optical storage medium of the invention comprises a substrate layer, a data layer arranged on the substrate layer, a first mask layer with a super resolution near field structure arranged above the data layer, a second mask layer with a super resolution near field structure arranged above the first mask layer, and a first dielectric layer arranged between the first and the second mask layer. The first and the second mask layer comprise a semiconductor material, which has an increased reflectivity, when irradiated with a laser beam.

The semiconductor material is in particular one of the III-V semiconductor family, for example GaSb or an indium alloy with a bandgap below 1 eV. The semiconductor material may be doped in addition by using an n-doping material, for example selenium and/or tellurium, for increasing the reflectivity of the mask layers, when irradiated with a laser beam.

By using two semiconductor mask layers, separated by a dielectric layer disposed between, the reflectivity behavior of the optical storage medium can be increased with regard to an optical storage medium comprising only one semiconductor mask layer above the data layer. By optimizing the thicknesses of the first dielectric layer and the two semiconductor mask layers, and by including further a second and a third dielectric layer, a reflectivity increase of about 100 % can be expected in comparison with a single semiconductor mask layer, even when using two single semiconductor mask layers having in total the same thickness as compared with a single semiconductor mask layer, and a respective improvement in signal modulation can be obtained therefore.

The following optimized thicknesses have been obtained for an storage medium comprising three dielectric layers wherein a first dielectric layer has a thickness within a range of 5-100 nm, a second dielectric layer has thickness within a range of 10-50 nm, and a third dielectric layer has thickness within a range of 10-50 nm. The first and the second mask layers have in particular a thickness within a range of 10-30 nm, for which best modulation signals are expected.

The two semiconductor mask layers separated by the dielectric layer can be used in particular for an optical disc as the optical storage medium having a read-only data layer with a pit structure.

## BRIEF DESCRIPTION OF THE DRAWINGS

Preferred embodiments of the invention are explained in more detail below by way of example with reference to schematic drawings, which show:

Fig. 1     a calculated reflectivity factor for an InSb mask layer as a function of the free carrier concentration,

Fig. 2     a calculation of the absorption coefficient in dependency of the free carrier concentration for the InSb layer of Fig. 1,

Fig. 3     a calculation of the reflectivity factor of an n- doped semiconductor in dependency of the laser power and the doping concentration of the semiconductor,

Fig. 4     an optical storage medium with a first and a second mask layer having a super resolution near field structure according to the invention,

Fig. 5     modulation values for optical storage media with single layer and double layer structures, and

Fig. 6     reflectivity values for optical storage media with single layer and double layer structures with the side condition of $R_c$ being larger than 10%.

## DETAILED DESCRIPTION OF PREFERRED EMBODIMENTS

The reflectivity R of a thin semiconductor layer is a function of the free carrier concentration and the thickness of the layer. The free carrier concentration can be calculated by using the Drude model of free electrons in solids. For a semiconducting layer with a thickness d, one can write the free carrier concentration N as follows:

$$N \propto (1-R)[1-\exp(-\alpha d)]\frac{1}{d}$$

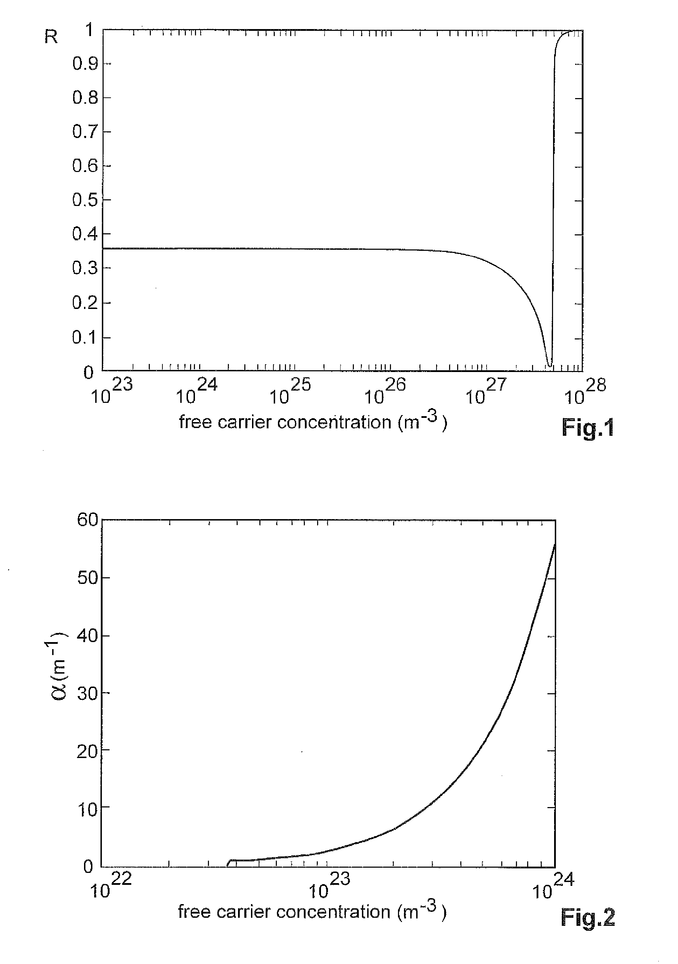

where $\alpha$ is the absorption coefficient of the material. The resulting reflectivity R as a function of the free carrier concentration is shown in figure 1 for an InSb layer. As can be seen, above a certain threshold of the free carrier concentration, the reflectivity rises to a level of almost one.

The dependency between the absorption coefficient $\alpha$ and the free carrier concentration N is shown in figure 2, which shows the calculated absorption coefficient $\alpha$ as a function of the free carrier concentration for an InSb layer. Thus, by increasing $\alpha$, more energy is absorbed with the same laser power.

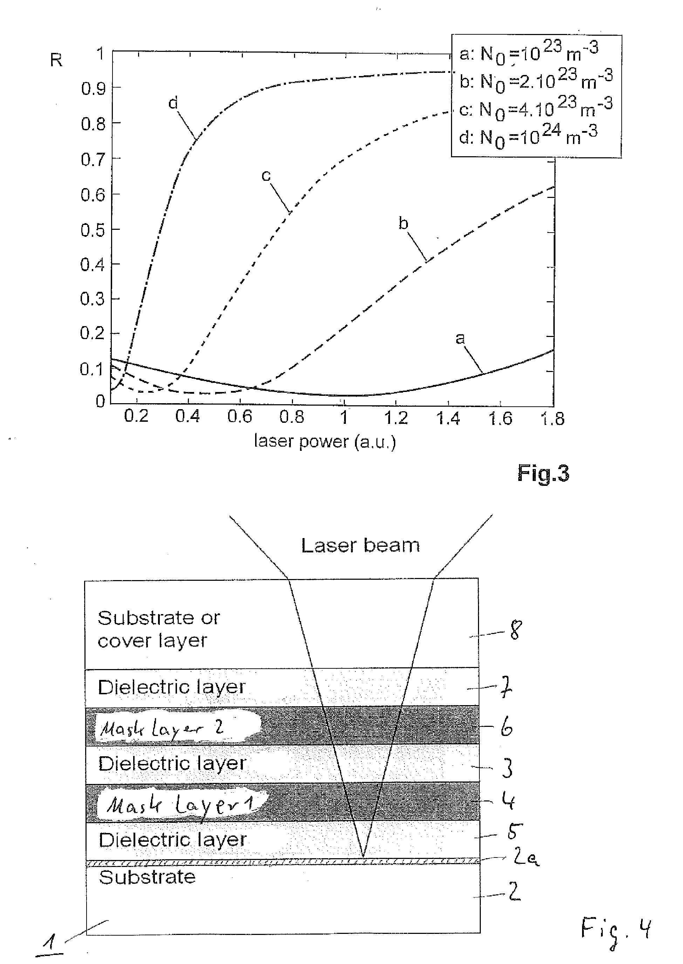

If the semiconductor is doped, the initial carrier concentration is increased and can be further enhanced by laser absorption from an initial carrier concentration N to a concentration N' when irradiated. This is shown in figure 3, in which the reflectivity R is plotted as a function of the laser power for several doping concentrations No.

**[0019]** If the semiconductor material is n-doped, the number of free electrons representing the free carrier concentration N is increased correspondingly. As shown in figure 3, when the doping increases to a value of $10^{24}$ m$^{-3}$, a high reflectivity factor can be obtained even when using a comparatively low laser power. Then, one can expect to trigger a near-field Super-RENS effect with a lower laser power, thus reducing the heat dissipation in the disk. As can be seen in figure 3, a doping with a concentration of No = $10^{24}$ m$^{-3}$ is sufficient for providing a rise of the reflectivity factor from about 0,2 to 0,8, when increasing the laser power from 0,2 to 0,4 arbitrary units.

Current optical discs using the InSb material as a mask layer for providing a super resolution near field effect show a relative reflectivity change $\Delta R/R_c$ of about 100% corresponding with a factor of 2, as described in J. Pichon et al., "Thermo-optical origins of the super-resolution effect: real-time characterization of the huge and reversible optical nonlinearity of InSb", ISOM conference 2007 (Mo-B-06). $R_c$ is the reflectivity of the disc for the crystalline state of InSb at low laser power. It can be assumed that an improvement of the reflectivity change would strongly improve the super-resolution effect itself. In addition, this would reduce the cross-talk between tracks or between layers.

Further, it has been shown that the optimum thickness of the InSb mask layer itself is about 20 nm due to the microcrystalline structure, as described in B. Hyot et al., "Super-Resolution ROM disk with a semi-conductive InSb active layer: influence of the crystalline microstructure", European Phase Change and Ovonics Symposium 2007. Including some tolerance, the optimum thickness can be expected to be in a range of 15 to 25 nm. For thicker InSb layers, the crystalline structure is changed and the super-resolution effect is reduced. As a consequence, a thicker InSb layer cannot be used to improve the reflectivity change.

According to the present invention, a possibility is described to improve the reflectivity change of an optical storage medium having a mask layer for providing a super resolution near field structure effect based on an increased reflectivity of the mask layer, by using a first and a second mask layer separated by a dielectric layer as a protection layer arranged between both mask layers, wherein both mask layers comprise a semiconductor material, which has an increased reflectivity, when irradiated with a laser beam. As a semiconductor material advantageously one of the III-V semiconductor family can be used, for example InAs. For both mask layers in particular the same semiconductor material is used.

A preferred embodiment of an optical storage medium 1 is shown in figure 4, which comprises a substrate layer 2, on which a data layer 2a is arranged. The data layer 2a comprises in particular a pit structure as a read-only data layer. Above the data layer 2a a first mask layer 4 and a second mask layer 6 are arranged, which are separated by a first dielectric layer 3. The thickness of both mask layers is in particular within a range of 15 nm - 25 nm.

The optical storage medium 1 comprises advantageously also a second dielectric layer 5 arranged between the data layer 2a and the first mask layer 4, and a third dielectric layer 3, arranged above the second mask layer 6. Above the third dielectric layer 7 further a cover layer 8 is placed as a protection of the optical storage medium 1.

According to simulations, an increase in the relative reflectivity change compared to $R_c$ can be expected from about 125% to about 220% for a double layer structure as explained with regard to figure 1, when the thicknesses of the mask layers and the dielectric layers are optimized, when using a mask layer thickness of 20nm. The simulation takes into account the optical parameters in accordance with the Drude model of free electrons, according to which the real part of the reflective index n is reduced and the imaginary part of the reflective index n is increased during laser irradiation. For the laser wavelength, a wavelength of 405 nm is taken into account.

The simulation was made for embodiments according to prior art having only one mask layer, and for embodiments according to the present invention having two mask layers. Each mask layer is separated from a neighboring layer by a dielectric layer in the prior art embodiments as well as in the embodiments according to the present invention. The modulation M was calculated by using the following formula:

$$M = \Delta R/R_c = (R_{high} - R_c)/R_c \qquad\qquad (1)$$

$R_c$ is the low power reflectivity and $R_{high}$ is the maximum reflectivity at high power. Then the thicknesses for the mask layer and the two dielectric layers of the prior art embodiment were varied and correspondingly the thicknesses for the two mask layers and the three dielectric layers according to the present invention were varied to obtain optimized modulation values M for several thicknesses of the mask layers.

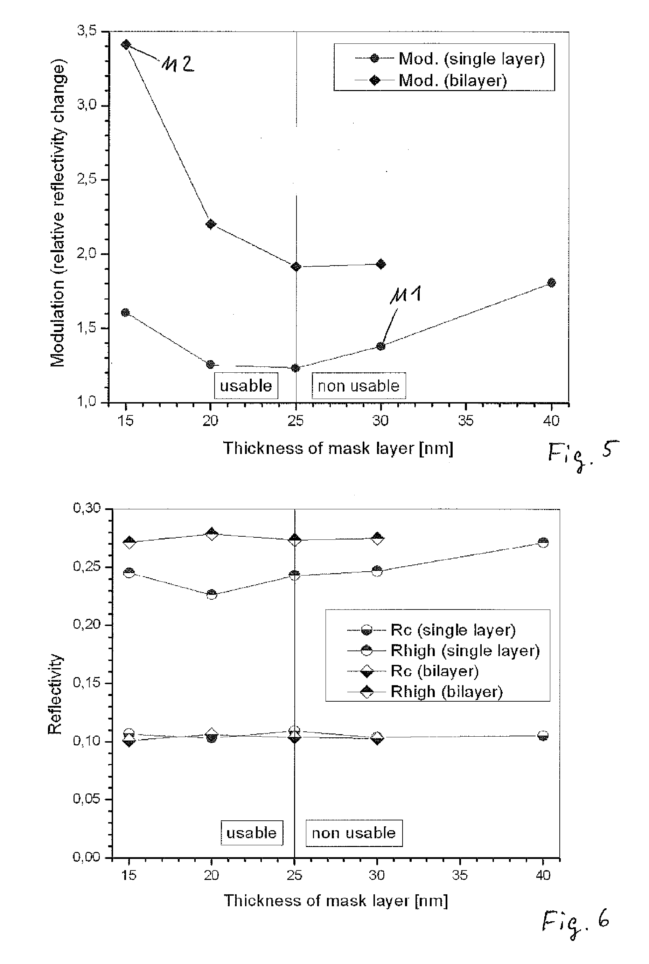

In figure 5, modulation results for single layer and double layer structures are shown having optimized thicknesses of the dielectric layers. The results show clearly a much higher modulation for the double layer structures with regard to the single layer structures. In particular, the double layer structures have a much higher reflectivity when same thicknesses of the mask layers are compared: for example a single layer structure with one 30 nm InSb layer has a modulation value M1 of 1,38, whereas the double layer structure with two InSb layers of each 15 nm has a modulation value of M2 = 3,41.

The simulation does not take into account the microcrystalline structure of the InSb layers. Therefore, thicknesses above 25 nm are not efficiently useable in practice, as indicated in figure 5 by the vertical line at 25 nm.

For small thicknesses of the mask layers, the modulation M increases strongly, which is due to the small reflectivity values $R_c$ for low thicknesses of the InSb layers. For practical applications it may be necessary to have a minimum reflectivity $R_c$, for example for the operation of a focusing servo of an optical disk drive for reading of the optical storage medium. Therefore, additional simulations have been made under the side condition of $R_c$ being larger than 10%.

Respective results are shown in figure 6, which shows reflectivity values for single layer structures and double layer structures with optimized thicknesses for the dielectric layers with the side condition of $R_c$ being larger than 10%. Because the modulation value increases for low reflectivity values $R_c$, the thicknesses of the dielectric layers of the single mask layer and the thicknesses of the dielectric layers 3, 5, 7 of the double layer structure were selected such, that the reflectivity $R_c$ is about 0,10. Calculations were made for thickness values of the mask layer of 15, 20, 25, 30 and 40 nm for the single layer structure and for thickness values of the mask layer of 15, 20, 25 and 30 nm for the double layer structures.

As can be seen in figure 6, the reflectivity $R_{high}$ is clearly higher for the double layer structure with regard to the single layer structure. The most interesting thickness range is indicated as "usable". For an expected optimum thickness of the mask layer of 20 nm, an increase of the modulation value from 1.25 to 1.63 can be expected for the double layer structure with regard to the single layer structure according to formula (1), when taking into account the side condition of $R_c$ being larger than 10%.

An optical storage medium comprising two mask layers provides therefore an improved modulation signal and further a lower cross talk between neighboring tracks resulting from conventional diffraction. It provides further an improved tracking signal for tracking methods requiring a super resolution signal, for example three-beam tracking methods utilizing the super resolution effect for each of the three beams.

Also other embodiments of the invention can be made by a person skilled in the art without departing from the spirit and scope of the present invention. The invention is in particular not limited for a use with a Blu-Ray type pick-up utilizing a laser wavelength of 405 nm. The invention resides therefore in the claims herein after appended.

**Claims**

1. Optical storage medium comprising
   a substrate layer (2),
   a data layer (2a) arranged on the substrate layer (2),
   a first mask layer (4) with a super resolution near field structure, arranged above the data layer (2a),
   a second mask layer (6) with a super resolution near field structure arranged above the first mask layer, and
   a first dielectric layer (3) disposed between the first and the second mask layer (4, 6), **wherein** the first and the second mask layers (4, 6) comprise a semiconductor material, which has an increased reflectivity, when irradiated with a laser beam.

2. Optical storage medium according to claim 1, **wherein** the semiconductor material is one of the III-V semiconductor family.

3. Optical storage medium according to claim 1 or 2, **wherein** the semiconductor material comprises or consists of an indium alloy having a bandgap below 1 eV, for example InAs or InSb, or comprises or consists of GaSb.

4. Optical storage medium according to claim 1, 2 or 3, **wherein** the mask layers (4, 6) comprise an n-doped semiconductor material, in particular a semiconductor material doped with selenium or tellurium.

5. Optical storage medium according to claim 4, **wherein** the dopant is selected such that the reflectivity of the mask layers (4, 6) is increased, when irradiated with a laser beam.

6. Optical storage medium according to one of the preceding claims, **comprising** further a second dielectric layer (5) disposed between the substrate layer (2) and the first mask layer (4).

7. Optical storage medium according to claim 6, **wherein** the first and the second mask layers (4,6) have a thickness within a range of 10-30 nm, the first dielectric layer (3) has a thickness within a range of 5-100 nm, and the second dielectric layer (5) has a thickness within a range of 10-50 nm.

8. Optical storage medium according to one of the preceding claims, **comprising** further a cover layer (8) and a third dielectric layer (7) between the cover layer (6) and the second mask layer (6).

9. Optical storage medium according to claim 8, **wherein** the third dielectric layer (7) has a thickness within a range of 10-50 nm.

10. Optical storage medium according to one of the preceding claims, **wherein** the optical storage medium is an optical disc, and wherein the data layer (2a) is included on top of the substrate layer (2) as a read-only data layer with a pit structure.

11. Optical storage medium according to one of the preceding claims, **wherein** a reflective layer is included between the first mask layer (4) and the substrate layer (2).

Fig.1

Fig.2

Fig.3

Fig. 4

Fig. 5

Fig. 6

Europäisches
Patentamt

European
Patent Office

Office européen
des brevets

# EUROPEAN SEARCH REPORT

Application Number

EP 08 15 4269

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2005/170133 A1 (AHN KUN H [KR] ET AL AHN KUN HO [KR] ET AL) 4 August 2005 (2005-08-04) * paragraphs [0047] - [0067]; figures 5a-5c(b),6b * | 1-11 | INV. G11B7/257 G11B7/005 |
| D,Y | B. HYOT, X. BIQUARD, F. LAULAGNET: "Super-Resolution ROM Disc with a Semi-Conductive InSb Active Layer" EPCOS-EUROPEAN PHASE CHANGE AND OVONICS SYMPOSIUM, 2007, pages 1-4, XP002515345 * the whole document * | 1-11 | |
| Y | US 2003/193857 A1 (ICHIHARA KATSUTARO [JP] ET AL) 16 October 2003 (2003-10-16) * paragraphs [0059] - [0080]; tables 1,2 * | 1-11 | |
| A | J. PICHON ET AL: "Multiphysics simulation of Super-resolution BD ROM Optical Disk Readout" PROC. OF SPIE - OPTICAL DATA STORAGE 2006, vol. 6282, 2006, pages 628219-1-628219-11, XP002515346 * the whole document * | 1-11 | |

TECHNICAL FIELDS SEARCHED (IPC)

G11B

The present search report has been drawn up for all claims

| Place of search | Date of completion of the search | Examiner |
|---|---|---|
| The Hague | 17 February 2009 | Fagundes-Peters, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 08 15 4269

This annex lists the patent family members relating to the patent documents cited in the above-mentioned European search report.
The members are as contained in the European Patent Office EDP file on
The European Patent Office is in no way liable for these particulars which are merely given for the purpose of information.

17-02-2009

| Patent document cited in search report | Publication date | Patent family member(s) | Publication date |
|---|---|---|---|
| US 2005170133 A1 | 04-08-2005 | CN 1609974 A | 27-04-2005 |
| US 2003193857 A1 | 16-10-2003 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20050153108 A
- US 2005259563 A
- EP 1492101 A
- US 7232598 B

### Non-patent literature cited in the description

- **Tominaga ; Nakano ; Atoda.** An approach for recording and readout beyond the diffraction limit with an Sb thin film. *Applied Physics Letters,* 12 October 1998, vol. 73 (15
- **Takamori et al.** Energy-Gap-Induced super-Resolution Optical Disc using ZnO Interference Film. *Japanese Journal of Applied Physics,* 2005, vol. 44 (5b), 3627-3630
- **Hyot et al.** Phase change materials and Super-RENS. *E*PCOS 05, Technical Digest,* 2005
- **Pichon et al.** Multiphysics Simulation of Super-Resolution BD ROM Optical Disk Readout. *IEEE, 0-7803-9494-1/06,* 2006, 206-208